# EUROPEAN PATENT APPLICATION

(11) **EP 4 513 946 A1**
(43) Date of publication of application: **26.02.2025**
(21) Application number: 23791231.6
(22) Date of filing: 18.04.2023
(51) Int. Cl.: H04W 24/02

(54) **NETWORK ACCESS METHOD, INFORMATION SENDING METHOD, AND APPARATUSES, AND READABLE STORAGE MEDIUM**

(30) Priority: 20.04.2022 CN 202210420832
(71) Applicant: Datang Mobile Communications Equipment Co., Ltd., Beijing 100085 (CN)
(72) Inventor: YANG, Meiying, Beijing 100085 (CN); CHENG, Fangchen, Beijing 100085 (CN); CHEN, Li, Beijing 100085 (CN); WANG, Jiaqing, Beijing 100085 (CN); ZHANG, Yinghao, Beijing 100085 (CN)
(74) Representative: Maiwald GmbH
(86) International application number: PCT/CN2023/088978
(87) International publication number: WO 2023/202576

(57) **Abstract**

A network access method, an information transmission method, a device and a readable storage medium are provided. The method includes: monitoring, by a first access node, a reference signal from at least one second access node, where the reference signal carries at least one of the following: a node identifier, node configuration information or service requirement information, of the second access node; obtaining, by the first access node, first access configuration information of the first access node based on the node configuration information and/or the service requirement information of the at least one second access node; and accessing a network or updating an accessed network, by the first access node, based on the first access configuration information.

## Description

### CROSS-REFERENCE TO RELATED APPLICATION

This application claims a priority to Chinese Patent Application No. 202210420832.3 filed on April 20, 2022, which is incorporated in its entirety by reference herein.

### TECHNICAL FIELD

The present disclosure relates to the technical field of communications, and in particular to a network access method, a device, and a readable storage medium.

### BACKGROUND

In the current design of a communication network architecture, configuration information for a base station to access a network, including information such as a frequency used by the base station, an available frequency or an available frequency band, is usually pre-configured and is fixedly configured. The base station accesses the network based on the pre-configured information. Through processes such as synchronization and random access channel (Random Access Channel, RACH), a terminal accesses the base station and obtains network resources, to perform service transmission.

The above access method for the base station to access the network results in low flexibility. In addition, as the technology continues to advance, an increasing quantity of mobile access nodes are emerging, and the above access method based on the pre-configuration is difficult to be applied to network access of the above access nodes.

### SUMMARY

Embodiments of the present disclosure provide a network access method for an access node, an information transmission method, a device, and a readable storage medium, to solve the problem of poor flexibility of network access of the access node.

In a first aspect, embodiments of the present disclosure provide a network access method for an access node, including:
monitoring, by a first access node, a reference signal from at least one second access node, where the reference signal carries at least one of the following: a node identifier, node configuration information or service requirement information, of the second access node;
obtaining, by the first access node, first access configuration information of the first access node based on the node configuration information and/or the service requirement information of the at least one second access node; and
accessing a network or updating an accessed network, by the first access node, based on the first access configuration information.

Optionally, the node configuration information includes at least one of the following: resource information, bandwidth configuration, a transmission power, service information, a modulation mode, a coding mode, a multiple access mode, a resource multiplexing mode, a communication mode or a type of reference signal, of the second access node;
the service requirement information includes at least one of the following: a type of a service, a quality of service (Quality of Service, QOS) identifier of the service, a data rate requirement of the service, a spectral efficiency requirement, a latency requirement, a coverage requirement, a reliability requirement, a size of data cache or a resource requirement of the service;
the first access configuration information includes at least one of the following: resource information, a transmission power, service information, a modulation mode, a coding mode, a multiple access mode, a resource multiplexing mode, a communication mode or a type of reference signal, for the first access node.

Optionally, the reference signal includes: a reference signal based on a sequence, and/or, a reference signal based on signaling.

Optionally, the obtaining the first access configuration information of the first access node includes: determining, by the first access node, the first access configuration information of the first access node based on at least one of the node configuration information or the service requirement information of the at least one second access node.

Optionally, the obtaining the first access configuration information of the first access node includes:
transmitting, by the first access node, configuration request information; and
receiving, by the first access node, indication information from a centralized control node, and determining the first access configuration information of the first access node based on the indication information.

Optionally, the configuration request information includes at least one of the following:
a node identifier of the first access node;
the node configuration information of the at least one second access node;
the service requirement information of the at least one second access node;
a parameter to be configured at the request of the first access node; or,
device capability information of the first access node.

Optionally, the transmitting, by the first access node, the configuration request information including: transmitting, by the first access node, a reference signal carrying the configuration request information.

Optionally, the obtaining the first access configuration information of the first access node including: obtaining, by the first access node, a first resource of the first access node, through distributed control between at least two first access nodes, based on at least one of the monitored node configuration information or service requirement information of the second access node.

Optionally, the distributed control between the at least two first access nodes includes at least one of the following:
a process of coordinating or negotiating resources by the at least one first access node;
a result of coordinating or negotiating resources by the at least one first access node;
a process of competing for the use of resources by the at least one first access node;
a result of competing for the use of resources by the at least one first access node;
a process of using resources through a pre-configured pattern by the at least one first access node;
a result of using resources through the pre-configured pattern by the at least one first access node;
a process of using resources through claiming by the at least one first access node; or,
a result of using resources through claiming by the at least one first access node.

Optionally, before the monitoring, by the first access node, the reference signal from the at least one second access node, the method further includes: configuring the first access node based on node configuration information of the first access node.

Optionally, after the accessing the network or the updating the accessed network, the network access method further includes: performing, by the first access node, information transmission based on the first access configuration information.

In a second aspect, embodiments of the present disclosure provide an information transmission method for an access node, including:
transmitting, by a second access node, a reference signal, where the reference signal carries at least one of the following: a node identifier, node configuration information, or service requirement information, of the second access node.

Optionally, the reference signal is used to provide the node configuration information and/or the service requirement information of the second access node to the first access node, the node configuration information and/or the service requirement information of at least one second access node is used to obtain first access configuration information, and the first access configuration information is used for accessing a network or updating an accessed network.

Optionally, the node configuration information includes at least one of the following: frequency domain resource information, code domain resource information, bandwidth configuration, a transmission power, service information, a modulation mode, a coding mode, a multiple access mode, a resource multiplexing mode, a communication mode or a type of reference signal; where the frequency domain resource information includes at least one of the following: a supported frequency resource, a used frequency resource, or an available frequency resource; and
the service requirement information includes at least one of the following: a type of a service, a quality of service (QOS) identifier of the service, a data rate requirement of the service, a spectral efficiency requirement, a latency requirement, a coverage requirement, a reliability requirement, a size of data cache or a resource requirement of the service.

Optionally, the reference signal includes: a reference signal based on a sequence, and/or, a reference signal based on signaling.

In a third aspect, embodiments of the present disclosure provide a network access method for an access node, including:
receiving, by a centralized control node, configuration request information from at least one first access node;
determining, by the centralized control node, first access configuration information of the at least one first access node based on the configuration request information from the at least one first access node; and
transmitting, by the centralized control node, to the at least one first access node, indication information carrying the first access configuration information.

Optionally, the configuration request information includes at least one of the following:
a node identifier of the first access node;
node configuration information of at least one second access node monitored by the first access node;
service requirement information of the at least one second access node monitored by the first access node;
a parameter to be configured at the request of the first access node; or,
device capability information of the first access node.

Optionally, the receiving, by the centralized control node, the configuration request information from the at least one first access node including: obtaining, by the centralized control node, the configuration request information from a reference signal transmitted by the at least one first access node.

In a fourth aspect, embodiments of the present disclosure provide a network access device, applied to a first access node, including: a memory, a transceiver, and a processor:
the memory is configured to store a computer program; the transceiver is configured to transmit and receive data under control of the processor; and the processor is configured to read the computer program in the memory to perform the following operation:
monitoring a reference signal from at least one second access node, where the reference signal carries at least one of the following: a node identifier, node configuration information or service requirement information, of the second access node;
obtaining first access configuration information of the first access node based on the node configuration information and/or the service requirement information of the at least one second access node; and
accessing a network or updating an accessed network, based on the first access configuration information.

Optionally, the node configuration information includes at least one of the following: resource information, bandwidth configuration, a transmission power, service information, a modulation mode, a coding mode, a multiple access mode, a resource multiplexing mode, a communication mode or a type of reference signal, of the second access node;
the service requirement information includes at least one of the following: a type of a service, a quality of service (QOS) identifier of the service, a data rate requirement of the service, a spectral efficiency requirement, a latency requirement, a coverage requirement, a reliability requirement, a size of data cache or a resource requirement of the service;
the first access configuration information includes at least one of the following: resource information, a transmission power, service information, a modulation mode, a coding mode, a multiple access mode, a resource multiplexing mode, a communication mode or a type of reference signal, for the first access node.

Optionally, the reference signal includes: a reference signal based on a sequence, and/or, a reference signal based on signaling.

Optionally, the processor is further configured to read the computer program in the memory to perform following operation:
determining the first access configuration information of the first access node based on at least one of the node configuration information or the service requirement information of the at least one second access node.

Optionally, the processor is further configured to read the computer program in the memory to perform following operation:
transmitting configuration request information; and
receiving indication information from a centralized control node, and determining the first access configuration information of the first access node based on the indication information.

Optionally, the configuration request information includes at least one of the following:
a node identifier of the first access node;
the node configuration information of the at least one second access node;
the service requirement information of the at least one second access node;
a parameter to be configured at the request of the first access node; or,
device capability information of the first access node.

Optionally, the processor is further configured to read the computer program in the memory to perform following operation:
transmitting a reference signal carrying the configuration request information.

Optionally, the processor is further configured to read the computer program in the memory to perform following operation:
obtaining a first resource of the first access node, through distributed control between at least two first access nodes, based on at least one of the monitored node configuration information or service requirement information of the second access node.

Optionally, the distributed control between the at least two first access nodes includes at least one of the following:
a process of coordinating or negotiating resources by the at least one first access node;
a result of coordinating or negotiating resources by the at least one first access node;
a process of competing for the use of resources by the at least one first access node;
a result of competing for the use of resources by the at least one first access node;
a process of using resources through a pre-configured pattern by the at least one first access node;
a result of using resources through the pre-configured pattern by the at least one first access node;
a process of using resources through claiming by the at least one first access node; or,
a result of using resources through claiming by the at least one first access node.

Optionally, the processor is further configured to read the computer program in the memory to perform following operation:
configuring the first access node based on node configuration information of the first access node before monitoring the reference signal of the at least one second access node.

Optionally, the processor is further configured to read the computer program in the memory to perform following operation:
after the accessing the network or the updating the accessed network, performing information transmission based on the first access configuration information.

In a fifth aspect, embodiments of the present disclosure provide an information transmission device, applied to a second access node, including: a memory, a transceiver, and a processor:
the memory is configured to store a computer program; the transceiver is configured to transmit and receive data under control of the processor; and the processor is configured to read the computer program in the memory to perform the following operation:
transmitting a reference signal, where the reference signal carries at least one of the following: a node identifier, node configuration information, or service requirement information, of the second access node.

Optionally, the reference signal is used to provide the node configuration information and/or the service requirement information of the second access node to the first access node, the node configuration information and/or the service requirement information of at least one second access node is used to obtain first access configuration information, and the first access configuration information is used for accessing a network or updating an accessed network.

Optionally, the node configuration information includes at least one of the following: frequency domain resource information, code domain resource information, bandwidth configuration, a transmission power, service information, a modulation mode, a coding mode, a multiple access mode, a resource multiplexing mode, a communication mode or a type of reference signal; where the frequency domain resource information includes at least one of the following: a supported frequency resource, a used frequency resource, or an available frequency resource; and
the service requirement information includes at least one of the following: a type of a service, a quality of service (QOS) identifier of the service, a data rate requirement of the service, a spectral efficiency requirement, a latency requirement, a coverage requirement, a reliability requirement, a size of data cache or a resource requirement of the service.

Optionally, the reference signal includes: a reference signal based on a sequence, and/or, a reference signal based on signaling.

In a sixth aspect, embodiments of the present disclosure provide a network access device, applied to a centralized control node, including: a memory, a transceiver, and a processor:
the memory is configured to store a computer program; the transceiver is configured to transmit and receive data under control of the processor; and the processor is configured to read the computer program in the memory to perform the following operation:
receiving configuration request information from at least one first access node;
determining first access configuration information of the at least one first access node based on the configuration request information from the at least one first access node; and
transmitting to the at least one first access node, indication information carrying the first access configuration information.

Optionally, the configuration request information includes at least one of the following:
a node identifier of the first access node;
node configuration information of at least one second access node monitored by the first access node;
service requirement information of the at least one second access node monitored by the first access node;
a parameter to be configured at the request of the first access node; or,
device capability information of the first access node.

Optionally, the processor is further configured to read the computer program in the memory to perform following operation:
obtaining the configuration request information from a reference signal transmitted by the at least one first access node.

In a seventh aspect, embodiments of the present disclosure provide a network access device, applied to a first access node, including:
a first monitoring unit, configured to monitor a reference signal from at least one second access node, where the reference signal carries at least one of the following: a node identifier, node configuration information or service requirement information, of the second access node;
a first obtaining unit, configured to obtain first access configuration information of the first access node based on the node configuration information and/or the service requirement information of the at least one second access node; and
a first access unit, configured to access a network or update an accessed network based on the first access configuration information.

In an eighth aspect, embodiments of the present disclosure provide a signal transmission device, applied to a second access node, including:
a first transmission unit, configured to transmit a reference signal, where the reference signal carries at least one of the following: a node identifier, node configuration information, or service requirement information, of the second access node.

In a ninth aspect, embodiments of the present disclosure provide a network access device, applied to a centralized control node, including:
a first reception unit, configured to receive configuration request information from at least one first access node;
a first determination unit, configured to determine first access configuration information of the at least one first access node based on the configuration request information from the at least one first access node; and
a first transmission unit, configured to transmit to the at least one first access node, indication information carrying the first access configuration information.

In a tenth aspect, embodiments of the present disclosure further provide a processor readable storage medium, having a computer program stored thereon, and the computer program, when being executed by a processor, implements the steps in the method as described above.

In the embodiments of the present disclosure, the first access node obtains, based on the monitored reference signal from other access node, the first access configuration information for the first access node to access a network. Subsequently, it accesses a network or updates an accessed network based on the first access configuration information. Based on the above process, the network access method based on fixed configuration information in the related technologies is changed. In this way, dynamic adjustment of its own network access configuration based on the reference signal from the surrounding access node can be flexibly achieved, thereby improving the flexibility of the access node in accessing the network and simplifying the configuration for the access node.

### BRIEF DESCRIPTION OF THE DRAWINGS

FIG. 1 is a schematic diagram of an application scenario of a network access method for an access node according to embodiments of the present disclosure;
FIG. 2 is a first flow chart of a network access method for an access node according to embodiments of the present disclosure;
FIG. 3 is a schematic diagram of another application scenario of a network access method for an access node according to embodiments of the present disclosure;
FIG. 4 is a flow chart of an information transmission method according to embodiments of the present disclosure
FIG. 5 is a second flow chart of a network access method for an access node according to embodiments of the present disclosure;
FIG. 6 is a first structural diagram of a network access device according to embodiments of the present disclosure;
FIG. 7 is a first structural diagram of an information transmission device according to embodiments of the present disclosure;
FIG. 8 is a second structural diagram of a network access device according to embodiments of the present disclosure;
FIG. 9 is a third structural diagram of a network access device according to embodiments of the present disclosure;
FIG. 10 is second structural diagram of an information transmission device according to embodiments of the present disclosure; and
FIG. 11 is a fourth structural diagram of a network access device according to embodiments of the present disclosure.

### DETAILED DESCRIPTION

The term "and/or" in the embodiments of the present disclosure describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it.

The term "multiple" in the embodiments of the present disclosure refers to two or more than two, and other words for expressing quantities are similar to it.

The technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

Embodiments of the present disclosure provide a network access method for an access node, a device, and a readable storage medium, to improve flexibility of network access of the access node.

The method and the device are based on the same application concept. Since the principles of solving problems in the method and the device are similar, reference may be made to each other for implementations of the device and the method, the repetition of which is not provided herein.

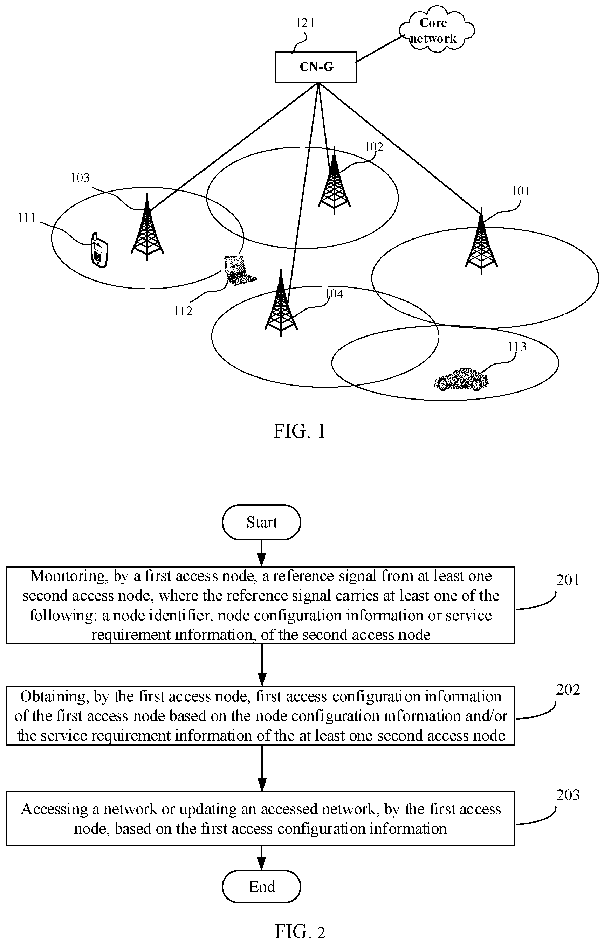

FIG. 1 is a schematic diagram of an application scenario of embodiments of the present disclosure. In FIG, 1, there are multiple base stations 101~104, multiple terminals 111~113 (such as an automobile and a smartphone), a core network gateway (Core Network Gateway, CN-G) 121 and a core network. In embodiments of the present disclosure, an access node (including a first access node and a second access node hereinafter) may be a wireless access point. The wireless access point may be any device that enables a wireless connection point for end-to-end communication. The wireless access point includes at least one of the following: a base station, or a terminal. For example, the access node may be one or more of the base stations 101~104 and the terminals 111~113 in FIG. 1. The base station may include at least one of the following: a macro station, a small station, a home base station. The base station in embodiments of the present disclosure may be stationary or may be mobile. For example, a mobile base station specifically may be a base station deployed on at least one of a car, a train, an airplane, a ship, or the like. In some scenarios, the access node according to embodiments of the present disclosure may be a wireless access point that is activated.

Reference is made to FIG. 2. FIG. 2 is a flow chart of a network access method for an access node according to embodiments of the present disclosure. As shown in FIG. 2, when applied to a first access node, the method includes the following steps.

Step 201 includes: monitoring, by a first access node, a reference signal from at least one second access node, where the reference signal carries at least one of the following: a node identifier, node configuration information or service requirement information, of the second access node.

The first access node may be any one of a base station or a terminal, and the second access node may include at least one of a base station or a terminal. For example, the first access node is a base station and the second access node is a base station. Or, the first access node is a terminal and the second access node is a terminal. Or, the first access node is a base station and the second access node is a terminal.

In embodiments of the present disclosure, the reference signal transmitted by the second access node carries at least one of: a node identifier of the second access node, node configuration information of the second access node, or service requirement information of the second access node. For example, when the second access node is a base station, the reference signal typically carries at least one of the node identifier or the node configuration information of the second access node. When the second access node is a terminal, the reference signal typically carries at least one of the node identifier, the node configuration information, and the service requirement information of the second access node.

Specifically, the node configuration information of the access node (e.g., the second access node) may include at least one of the following: resource information, bandwidth configuration, a transmission power, service information, a modulation mode, a coding mode, a multiple access mode, a resource multiplexing mode, a communication mode, a type of reference signal or the like, of the second access node. The resource information of the second access node includes: information about resource(s) supported by the second access node, information about resource(s) used by the second access node, information about resource(s) available to the second access node, and the resource information may specifically include at least one of: frequency domain resource information, time domain resource information, spatial domain resource information, or code domain resource information. The frequency domain resource information may specifically include at least one of the following information: center frequency information, a frequency range, a frequency identifier, a frequency band identifier, or the like. The service information of the second access node may include at least one of the following: a service type, a load of the access node, load balancing of the access node, or the like. The service type may include at least one of the following: a broadcast service, a Vehicle-to-Everything (Vehicle-to-Everything, V2X) service, an Extended reliability (Extended reliability, XR) service, an Ultra-Reliable and Low Latency Communications (Ultra-Reliable and Low Latency Communications, URLLC) service, a File Transfer Protocol (File Transfer Protocol, FTP) service, an Instant IP Multimedia (IP Multimedia, IM) service, a Voice Over IP (Voice Over IP, VoIP) service, or the like. The resource multiplexing mode may include at least one of the following: a time domain resource multiplexing mode, a frequency domain resource multiplexing mode, a spatial domain resource multiplexing mode, or a code domain resource multiplexing mode.

The service requirement information includes at least one of the following: a type of a service, a quality of service (Quality of Service, QoS) identifier of the service, a data rate requirement of the service, a spectral efficiency requirement, a latency requirement, a coverage requirement, a reliability requirement, a size of data cache, a resource requirement of the service, or the like.

The reference signal may include: a reference signal based on a sequence, and/or, a reference signal based on signaling. The sequence may include at least one of the following: a random sequence, a pseudo-random sequence, or a computer-generated sequence.

Step 202 includes: obtaining, by the first access node, first access configuration information of the first access node based on the node configuration information and/or the service requirement information of the at least one second access node.

The first access configuration information includes at least one of the following: a frequency resource, a code domain resource, a bandwidth resource, a transmission power, service information, a modulation mode, a coding mode, a multiple access mode, a resource multiplexing mode, a communication mode, a type of reference signal or the like, for the first access node. The first access configuration information may be configuration information adopted by the first access node, which includes a frequency resource, a code domain resource, a bandwidth resource, and a transmission power, etc., for example, the first access node may operate based on the first access configuration information.

Step 203 includes: accessing a network or updating an accessed network, by the first access node, based on the first access configuration information.

The first access node accesses the network based on the first access configuration information. If the first access node has accessed a network currently, it may update the accessed network based on the first access configuration information. That is, if the updated network is different from the current network, the first access node accesses the updated network, and if the updated network is the same as the current network, the process may end.

In addition, in step 203, the first access node may connect to at least one of a core network, a public network, or a private network, based on the first access configuration information, or, the first access node updates the accessed network based on the first access configuration information, where the accessed network includes at least one of a core network, a public network, or a private network.

For example, the first access node connecting to the core network may include: the first access node connecting to the core network through a gateway. The first access node may establish a channel for information or signaling exchange between the first access node and the core network through the gateway. The gateway may be a core network gateway.

As another example, the first access node connecting to the public network includes: the first access node connecting to an internet (internet) network. Further, the first access node may connect to the internet network through a gateway. The gateway may be a public network gateway.

As another example, the first access node connecting to the private network includes the first access node connecting to at least one of a home private network, an enterprise private network, a regional private network, or other private network as defined; further, the first access node may connect to the private network through the internet network.

In addition, the first access node may connect to the network in at least one of a wired manner or a wireless manner. The wired manner may include at least one of an optical fiber, or a cable. The wireless manner may include a radio electromagnetic wave in at least one frequency band.

In embodiments of the present disclosure, the gateway may connect at least one first access node. The first access node(s) to which the gateway is connected is variable. Variability includes at least one of the following: the quantity of first access node(s) to which the gateway is connected, first access node identifier(s), the quantity of intermediate nodes by which the gateway and the first access node are spaced.

The first access node may access the network through at least one hop. Accessing the network through at least one hop specifically refers to accessing the network through at least one intermediate node. The intermediate node specifically refers to a physical unit and/or a logical unit; the intermediate node may provide at least one of the following services: a communication service, information forwarding, resource allocation coordination, interference coordination, data scheduling, link selection, or link adaption.

For example, in an application scenario, a base station serves as the first access node, the network is a core network, and the gateway is a core network gateway, then, the base station accesses the core network through the core network gateway, to establish an information transmission channel; further, the first access node may access the core network through at least one hop.

Through the above steps, in the embodiments of the present disclosure, the first access node no longer relies on fixed configuration information to access a network. Instead, it obtains, based on the monitored reference signal from other access node, the first access configuration information for the first access node to access a network. Subsequently, it accesses a network or updates an accessed network based on the first access configuration information. Based on the above process, the network access method based on fixed configuration information in the related technologies is changed. In this way, dynamic adjustment of its own network access configuration based on the reference signal from the surrounding access node can be flexibly achieved, thereby improving flexibility of the access node in accessing the network.

After the accessing the network or the updating the accessed network, the first access node performs information transmission based on the first access configuration information. The information transmission includes at least one of data transmission, signaling transmission, or reference signal transmission.

Examples of the way in which the first access node obtains the first access configuration information in the above step 202 are described in the following.

In an optional implementation of the above step 202, the first access node determines the first access configuration information of the first access node, based on at least one of the node configuration information or the service requirement information of the at least one second access node. That is, in this manner, it is the first access node itself that determines the first access configuration information on its own.

For example, in a case that the first access node has multiple available frequency resources, the first access node may select, based on frequency resources already used by the second access node that are monitored, a frequency resource that does not overlap with the frequency resources already used by the second access node, as a frequency resource of the first access node. As another example, the first access node may determine, based on a monitored transmission power of the second access node, a level of a transmission power at which the first access node operates, to reduce interference between the access nodes. As another example, in a case that the second access node is a terminal, the first access node may determine, based on service requirement information of the terminal, a bandwidth resource for the operation of the first access node, to adapt to service needs of the terminal, in this way, better services can be provided for the terminal after the first access node enters the network.

In another optional implementation of the above step 202, the first access configuration information may be determined for the first access node by a centralized control node. This manner is also referred to herein as a centralized configuration manner. Specifically, the first access node may transmit configuration request information, for example, the first access node may transmit a reference signal carrying the configuration request information. Upon receiving the configuration request information from the first access node, the centralized control node determines the first access configuration information of the first access node and transmits it to the first access node through indication information. The first access node receives the indication information transmitted by the centralized control node, where the indication information carries the first access configuration information determined by the centralized control node, in this way, the first access node may determine the first access configuration information of the first access node based on the indication information.

In embodiments of the present disclosure, the configuration request information may include at least one of the following information:
1) a node identifier of the first access node;
2) the node configuration information of the at least one second access node;
3) the service requirement information of the at least one second access node;
4) a parameter to be configured at the request of the first access node; or,
5) device capability information of the first access node.

The parameter to be configured at the request of the first access node may specifically include at least one of the following:
a) an identifier of resource request, used for indicating whether there is a request for resource information;
b) a configuration request for resource, used for requesting configuration of the resource information of the first access node, where the resource information may include at least one of frequency domain resource information, time domain resource information, spatial domain resource information, or code domain resource information;
c) a configuration request for bandwidth, used for requesting configuration of the bandwidth of the first access node;
d) a configuration request for transmission power, used for requesting configuration of the transmission power of the first access node;
e) a configuration request for service information, used for requesting configuration of the service information of the first access node;
f) a configuration request for modulation mode, used for requesting configuration of the modulation mode of the first access node;
g) a configuration request for coding mode, used for requesting configuration of the coding mode of the first access node;
h) a configuration request for multiple access mode, used for requesting configuration of the multiple access mode of the first access node;
i) a configuration request for resource multiplexing mode, used for requesting configuration of the resource multiplexing mode of the first access node;
j) a configuration request for spatial domain multiplexing mode, used for requesting configuration of the spatial domain multiplexing mode of the first access node;
k) a configuration request for communication mode, used for requesting configuration of the communication mode of the first access node; or,
l) a configuration request for type of reference signal, used for requesting configuration of the type of reference signal of the first access node.

The device capability information of the first access node may specifically include at least one of the following:
a) information about a resource supported by the first access node, which includes at least one of: information about a frequency domain resource, information about a time domain resource, information about a spatial domain resource, or information about a code domain resource, supported by the first access node;
b) information about a bandwidth resource supported by the first access node;
c) a transmission power supported by the first access node;
d) information about a service supported by the first access node;
e) a modulation mode supported by the first access node;
f) a coding mode supported by the first access node;
g) a multiple access mode supported by the first access node;
h) a resource multiplexing mode supported by the first access node;
i) a spatial domain multiplexing mode supported by the first access node;
j) a communication mode supported by the first access node; or,
k) a type of a reference signal supported by the first access node.

In embodiments of the present disclosure, the centralized control node may determine first access configuration information of each first access node based on the received configuration request information of the at least one first access node. Specifically, first access configuration information of each first access node may be determined with an objective of reducing interference between the access nodes and improving spectral efficiency of the access nodes, which is not specifically limited in the present disclosure.

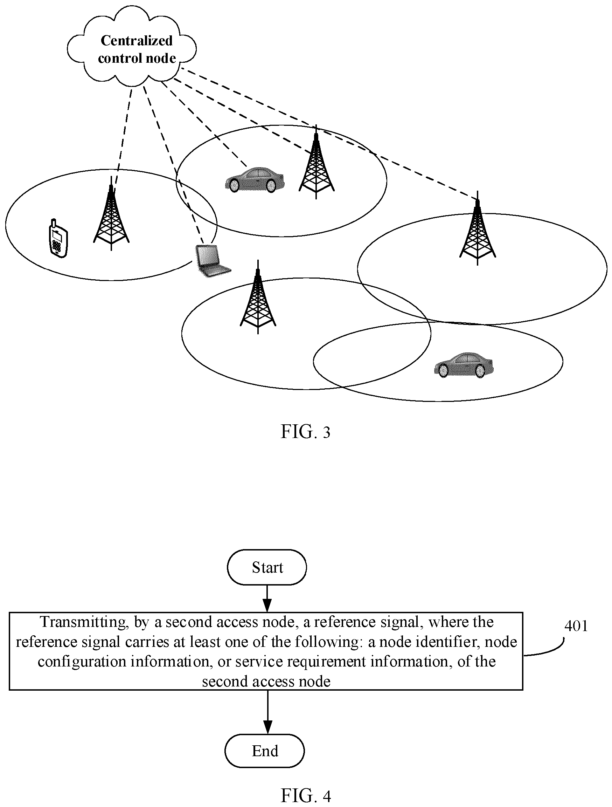

FIG. 3 is a schematic diagram of a centralized control node. The centralized control node may be connected to multiple access nodes (including base stations and terminals), receive configuration request information transmitted by the access node, and transmit, to the access node, indication information carrying access configuration information.

In embodiments of the present disclosure, the centralized control node may be a control node that performs a centralized control function, or may be a centralized control function. The centralized control node may include at least one of: at least one virtual unit or at least one physical unit. The virtual unit may be a virtual functional unit. The virtual unit may be hosted on at least one physical unit. The physical unit may include at least one access node.

In embodiments of the present disclosure, the virtual unit is a functional unit that performs at least one centralized control function; the physical unit may be a physical node, including at least one of: at least one access node, or at least one protocol layer.

In embodiments of the present disclosure, at least one virtual unit may be hosted on at least one first access node; the at least one physical unit may be hosted on at least one first access node; the first access node may include at least one of: at least one virtual unit, or at least one physical unit.

The centralized control function may include at least one of: access control, resource management, mobility management, dynamic switching, scheduling management, link adaptation, coverage management, or interference management.

The access control may include at least one of the following: management of first access node(s) accessing the centralized control node, or management of units under first access node(s) accessing the centralized control node.

The resource management may include at least one of the following: management and allocation of resources of the centralized control node; the resources of the centralized control node include at least one of: a time domain, a frequency domain, a space domain, or a code domain; the management and allocation of the resources of the centralized control node includes at least one of: coordinating, allocating, updating, or scheduling, of resources of at least one first access node connected to the centralized control node.

The mobility management may include at least one of: dynamic resource allocation or frequency multiplexing, among at least one first access node. The dynamic resource allocation includes at least one of: a same set of resources is used for all first access nodes, a same set of resources is used for downlinks (Downlink, DL) of all first access nodes, a same set of resources is used for uplinks (Uplink, UL) of all first access nodes, or a same set of resources is used for sidelinks (Sidelink, SL) of all first access nodes.

The coverage management may include dynamic coverage management. The dynamic coverage management includes: a dynamic change, a semi-static change, or a static change, of the coverage of at least one first access node.

The interference management may include dynamic interference management. The dynamic interference management includes: a dynamic change, a semi-static change, or a static change, of the interference of at least one first access node.

In another optional implementation of the above step 202, first access configuration information of each first access node may be determined through distributed control between at least two first access nodes, and this manner is also referred to herein as a distributed configuration manner. The at least one first access node may include the first access node in the above step 201, or may not include the first access node in the above step 201.

Specifically, the first access node may obtain a first resource of the first access node, through distributed control between at least two first access nodes, based on at least one of the monitored node configuration information or service requirement information of the second access node.

The distributed control between the at least two first access nodes includes at least one of the following:
1) A process of coordinating or negotiating resources by the at least one first access node.
   The process of coordinating or negotiating resources refers to the at least one first access node exchanging their respective resource information to determine resource information for the operation of each access node through.
2) A result of coordinating or negotiating resources by the at least one first access node.
   The result of coordinating or negotiating resources may be a result of resource information for the operation of the access node obtained in advance through a process of coordinating or negotiating resources.
3) A process of competing for the use of resources by the at least one first access node.
   The at least one access node competes for the occupation of resources. If the occupation fails, occupation is initiated again after randomly waiting for a period of time, and if the occupation succeeds, the occupied resource may be utilized.
4) A result of competing for the use of resources by the at least one first access node.
   The result of competing for the use of resources may be a result of resource information for the operation of the access node obtained in advance through a process of competing for the use of resources.
5) A process of using resources through a pre-configured pattern by the at least one first access node.
   The pre-configured pattern refers to pre-configured resource pattern information, and the resource pattern information may include at least one of: time-domain pattern information, frequency-domain pattern information, code-domain pattern information, or spatial-domain pattern information, of a resource.
6) A result of using resources through the pre-configured pattern by the at least one first access node.
7) A process of using resources through claiming by the at least one first access node.
   The process of using resources through claiming may specifically include at least one of: claiming a maximum use of resource, claiming to other access nodes a use of resource of the current node, or the like. Typically, the resource that is claimed for use may be larger than or equal to the actually used resource.
8) A result of using resources through claiming by the at least one first access node.

Each process of the above distributed control refers to obtaining the first access configuration information by performing the above process. Each result of the above distributed control refers to that: a relevant result has already been obtained in advance by performing the above process, and it is only needed to utilize the above result in this case. The description is provided by taking the implementation of obtaining the resource information in the first access configuration information through distributed control as an example, and other information in the first access configuration information may be obtained in a similar manner, which will not be repeated herein.

In embodiments of the present disclosure, before the above step 201, the first access node may be configured based on the node configuration information of the first access node. For the node configuration information of the first access node, reference may be made to the specific content of the configuration information of the second access node as described above, which will not be repeated herein. Through the above configuration, the first access node may have the initial configuration information, so as to facilitate the execution of the subsequent steps 201 to 203. In the embodiments of the present disclosure, the first access node may access the network based on the node configuration information, and then update the accessed network by executing the above steps 201 to 203.

As can be seen from the above description, based on the solutions of the embodiments of the present disclosure, the problem of poor flexibility of network access of the access node is solved, the flexibility of network access is improved, and the configuration process of network access is simplified.

Reference is made to FIG. 4. FIG. 4 is a flow chart of an information transmission method according to embodiments of the present disclosure. As shown in FIG. 4, the method includes the following step.

Step 401 includes: transmitting, by a second access node, a reference signal, where the reference signal carries at least one of the following: a node identifier, node configuration information, or service requirement information, of the second access node.

The node configuration information of the second access node may include at least one of the following: resource information, bandwidth configuration, a transmission power, service information, a modulation mode, a coding mode, a multiple access mode, a resource multiplexing mode, a communication mode, a type of reference signal or the like, of the second access node. The resource information of the second access node includes: information about resource(s) supported by the second access node, information about resource(s) used by the second access node, information about resource(s) available to the second access node, and the resource information may specifically include at least one of: frequency domain resource information, time domain resource information, spatial domain resource information, or code domain resource information. The frequency domain resource information may specifically include at least one of the following information: center frequency information, a frequency range, a frequency identifier, a frequency band identifier, or the like.

In embodiments of the present disclosure, the reference signal is used to provide the node configuration information and/or the service requirement information of the second access node to the first access node, the node configuration information and/or the service requirement information of at least one second access node is used to obtain first access configuration information, and the first access configuration information is used for accessing a network or updating an accessed network.

The service requirement information includes at least one of the following: a type of a service, a quality of service (QOS) identifier of the service, a data rate requirement of the service, a spectral efficiency requirement, a latency requirement, a coverage requirement, a reliability requirement, a size of data cache, a resource requirement of the service, or the like.

The reference signal may include: a reference signal based on a sequence, and/or, a reference signal based on signaling. The sequence may include at least one of: a random sequence, a pseudo-random sequence, or a computer-generated sequence.

In the embodiments of the present disclosure, the reference signal is transmitted by the second access node, so that the first access node can obtain the first access configuration information of the first access node based on the node configuration information of the second access node, and then access a network or update an accessed network based on the first access configuration information. In this way, the flexibility of network access of the first access node can be improved and the access configuration process can be simplified.

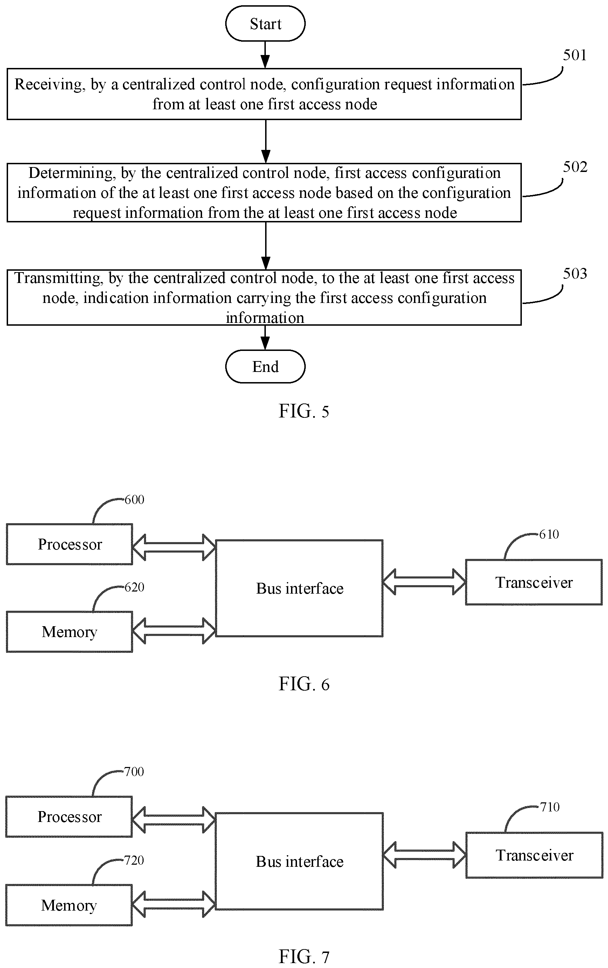

Reference is made to FIG. 5. FIG. 4 is a flow chart of a network access method for an access node according to another embodiment of the present disclosure. As shown in FIG. 5, the method includes the following steps.

Step 501 includes: receiving, by a centralized control node, configuration request information from at least one first access node.

The centralized control node obtains the configuration request information from the reference signal transmitted by the at least one first access node. The reference signal may include: a reference signal based on a sequence, and/or, a reference signal based on signaling. The sequence may include at least one of: a random sequence, a pseudo-random sequence, or a computer-generated sequence.

Step 502 includes: determining, by the centralized control node, first access configuration information of the at least one first access node based on the configuration request information from the at least one first access node.

In embodiments of the present disclosure, the centralized control node may determine first access configuration information of each first access node based on the received configuration request information of the at least one first access node. For example, first access configuration information of each first access node may be determined with an objective of reducing interference between the access nodes and improving the spectral efficiency of the access nodes, which is not specifically limited in the present disclosure.

Step 503 includes: transmitting, by the centralized control node, to the at least one first access node, indication information carrying the first access configuration information.

Through the above steps, in the embodiments of the present disclosure, the centralized control node can determine the first access configuration information of the first access node and then indicate it to the first access node, which can improve the flexibility of network access of the first access node and simplify the access configuration process.

Specifically, the configuration request information includes at least one of the following information:
a node identifier of the first access node;
node configuration information of at least one second access node monitored by the first access node;
service requirement information of the at least one second access node monitored by the first access node;
a parameter to be configured at the request of the first access node; or,
device capability information of the first access node.

The technical solutions in the embodiments of the present disclosure may be applied to various systems, especially 5^{th} generation mobile communication (the 5^{th} Generation, 5G) systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5G system, 5GS), etc.

The terminal involved in the embodiments of the present disclosure may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal may communicate with one or more core networks (Core Network, CN) through a radio access network (Radio Access Network, RAN). The wireless terminal may be a mobile terminal, such as a mobile phone (or referred to as a "cellular" phone) or a computer with a mobile terminal, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device), which is not limited in the embodiments of the present disclosure.

The network device involved in the embodiments of the present disclosure may be a base station, and the base station may have multiple cells providing services for terminals. According to different application scenarios, the base station may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of the present disclosure may be a network device (Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (the next generation node B, gNB) in a 5G network architecture (next generation system), or may be a home evolved node B (Home evolved Node B, HeNB), a relay node (relay node), a femto (femto), a pico (pico), etc., which is not limited in the embodiments of the present disclosure. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be two dimension MIMO (two dimension MIMO, 2D-MIMO), three dimension MIMO (three dimension MIMO, 3D-MIMO), full dimension MIMO (full dimension MIMO, FD-MIMO), or massive MIMO (massive-MIMO), or may be diversity transmission, or precoding transmission, or beamforming transmission, etc.

As shown in FIG. 6, a network access device according to embodiments of the present disclosure, applied to a first access node, includes:
a processor 600, configured to read a program in a memory 620 to perform the following process:
monitoring a reference signal from at least one second access node, where the reference signal carries at least one of the following: a node identifier, node configuration information or service requirement information, of the second access node;
obtaining first access configuration information of the first access node based on the node configuration information and/or the service requirement information of the at least one second access node; and
accessing a network or updating an accessed network, based on the first access configuration information; and
a transceiver 610, configured to receive and transmit data under control of the processor 600.

In FIG. 6, a bus architecture may include any quantity of interconnected buses and bridges. Various circuits including one or more processors represented by the processor 600 and a memory represented by the memory 620 are linked. The bus architecture may further link various other circuits together, such as a periphery component, a voltage stabilizer and a power management circuit, which are known in the art and are not further described herein. A bus interface provides an interface. The transceiver 610 may be multiple elements, i.e., including a transmitter and a receiver, providing a unit for communicating with various other devices on transmission media. The processor 600 is in charge of managing the bus architecture and common processes. The memory 620 may store data used by the processor 600 in performing operations.

The processor 600 may be a central processing unit (Central Processing Unit, CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor may adopt a multi-core architecture.

The processor 600 is in charge of managing the bus architecture and common processes. The memory 620 may store data used by the processor 600 in performing operations.

Optionally, the node configuration information includes at least one of the following: resource information, bandwidth configuration, a transmission power, service information, a modulation mode, a coding mode, a multiple access mode, a resource multiplexing mode, a communication mode or a type of reference signal, of the second access node;
the service requirement information includes at least one of the following: a type of a service, a quality of service (QOS) identifier of the service, a data rate requirement of the service, a spectral efficiency requirement, a latency requirement, a coverage requirement, a reliability requirement, a size of data cache or a resource requirement of the service;
the first access configuration information includes at least one of the following: resource information, a transmission power, service information, a modulation mode, a coding mode, a multiple access mode, a resource multiplexing mode, a communication mode or a type of reference signal, for the first access node.

Optionally, the reference signal includes: a reference signal based on a sequence, and/or, a reference signal based on signaling.

The processor 600 is further configured to read the program to perform following step:
determining the first access configuration information of the first access node based on at least one of the node configuration information or the service requirement information of the at least one second access node.

The processor 600 is further configured to read the program to perform following steps:
transmitting configuration request information; and
receiving indication information from a centralized control node, and determining the first access configuration information of the first access node based on the indication information.

Optionally, the configuration request information includes at least one of the following:
a node identifier of the first access node;
the node configuration information of the at least one second access node;
the service requirement information of the at least one second access node;
a parameter to be configured at the request of the first access node; or,
device capability information of the first access node.

The processor 600 is further configured to read the program to perform following step:
transmitting a reference signal carrying the configuration request information.

The processor 600 is further configured to read the program to perform following step:
obtaining a first resource of the first access node, through distributed control between at least two first access nodes, based on at least one of the monitored node configuration information or service requirement information of the second access node.

Optionally, the distributed control between the at least two first access nodes includes at least one of the following:
a process of coordinating or negotiating resources by the at least one first access node;
a result of coordinating or negotiating resources by the at least one first access node;
a process of competing for the use of resources by the at least one first access node;
a result of competing for the use of resources by the at least one first access node;
a process of using resources through a pre-configured pattern by the at least one first access node;
a result of using resources through the pre-configured pattern by the at least one first access node;
a process of using resources through claiming by the at least one first access node; or,
a result of using resources through claiming by the at least one first access node.

The processor 600 is further configured to read the program to perform following step:
configuring the first access node based on node configuration information of the first access node before monitoring the reference signal of the at least one second access node.

The processor 600 is further configured to read the program to perform following step:
after the accessing the network or the updating the accessed network, performing information transmission based on the first access configuration information.

The processor 600 is further configured to read the program to perform following step:
connecting to at least one of a core network, a public network, or a private network, based on the first access configuration information; or,
updating the accessed network based on the first access configuration information, where the accessed network includes at least one of a core network, a public network, or a private network.

It should be noted that the device according to the embodiments of the present disclosure can realize all the method steps in the above method embodiments, and the same technical effects can be realized. The same parts of the present embodiments as the method embodiments, and the beneficial effects, are not repeated herein.

As shown in FIG. 7, an information transmission device according to embodiments of the present disclosure, applied to a second access node, includes:
a processor 700, configured to read a program in a memory 720 to perform the following process:
transmitting a reference signal, where the reference signal carries at least one of the following: a node identifier, node configuration information, or service requirement information, of the second access node; and
a transceiver 710, configured to receive and transmit data under control of the processor 700.

In FIG. 7, a bus architecture may include any quantity of interconnected buses and bridges. Various circuits including one or more processors represented by the processor 700 and a memory represented by the memory 720 are linked. The bus architecture may further link various other circuits together, such as a periphery component, a voltage stabilizer and a power management circuit, which are known in the art and are not further described herein. A bus interface provides an interface. The transceiver 710 may be multiple elements, i.e., including a transmitter and a receiver, providing a unit for communicating with various other devices on transmission media. The processor 700 is in charge of managing the bus architecture and common processes. The memory 720 may store data used by the processor 700 in performing operations.

The processor 700 may be a central processing unit (central processing unit, CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor may adopt a multi-core architecture.

The processor 700 is in charge of managing the bus architecture and common processes. The memory 720 may store data used by the processor 400 in performing operations.

In embodiments of the present disclosure, the reference signal is used to provide the node configuration information and/or the service requirement information of the second access node to the first access node, the node configuration information and/or the service requirement information of at least one second access node is used to obtain first access configuration information, and the first access configuration information is used for accessing a network or updating an accessed network.

Optionally, the node configuration information includes at least one of the following: frequency domain resource information, code domain resource information, bandwidth configuration, a transmission power, service information, a modulation mode, a coding mode, a multiple access mode, a resource multiplexing mode, a communication mode or a type of reference signal; where the frequency domain resource information includes at least one of the following: a supported frequency resource, a used frequency resource, or an available frequency resource; and
the service requirement information includes at least one of the following: a type of a service, a quality of service (QOS) identifier of the service, a data rate requirement of the service, a spectral efficiency requirement, a latency requirement, a coverage requirement, a reliability requirement, a size of data cache or a resource requirement of the service.

Optionally, the reference signal includes: a reference signal based on a sequence, and/or, a reference signal based on signaling.

It should be noted that the device according to the embodiments of the present disclosure can realize all the method steps in the above method embodiments, and the same technical effects can be realized. The same parts of the present embodiments as the method embodiments, and the beneficial effects, are not repeated herein.

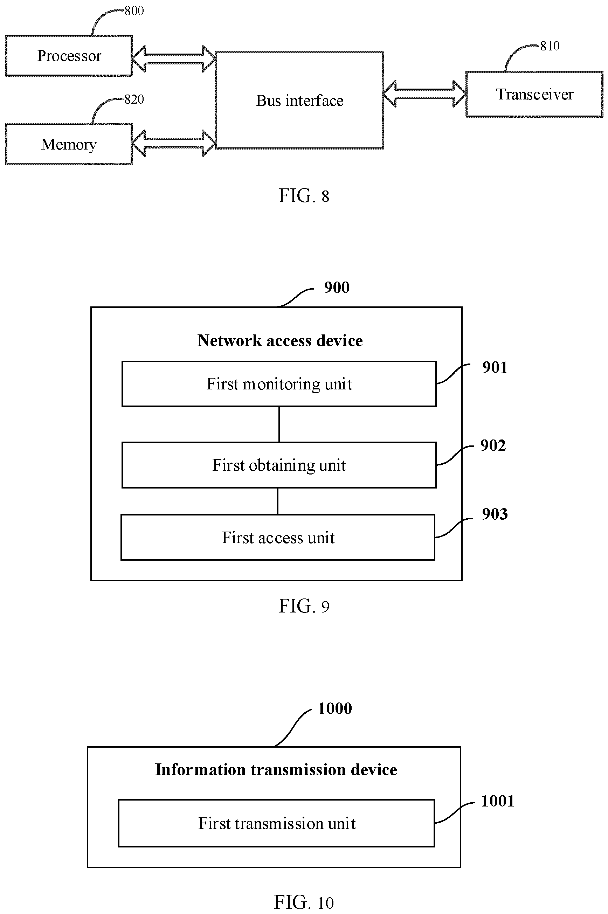

As shown in FIG. 8, a network access device according to embodiments of the present disclosure, applied to a centralized control node, includes:
a processor 800, configured to read a program in a memory 820 to perform the following process:
receiving configuration request information from at least one first access node;
determining first access configuration information of the at least one first access node based on the configuration request information from the at least one first access node; and
transmitting to the at least one first access node, indication information carrying the first access configuration information; and
a transceiver 810, configured to receive and transmit data under control of the processor 800.

In FIG. 8, a bus architecture may include any quantity of interconnected buses and bridges. Various circuits including one or more processors represented by the processor 800 and a memory represented by the memory 820 are linked. The bus architecture may further link various other circuits together, such as a periphery component, a voltage stabilizer and a power management circuit, which are known in the art and are not further described herein. A bus interface provides an interface. The transceiver 810 may be multiple elements, i.e., including a transmitter and a receiver, providing a unit for communicating with various other devices on transmission media. The processor 800 is in charge of managing the bus architecture and common processes. The memory 820 may store data used by the processor 800 in performing operations.

The processor 800 may be a central processing unit (central processing unit, CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor may adopt a multi-core architecture.

The processor 800 is in charge of managing the bus architecture and common processes. The memory 820 may store data used by the processor 800 in performing operations.

Optionally, the configuration request information includes at least one of the following:
a node identifier of the first access node;
node configuration information of at least one second access node monitored by the first access node;
service requirement information of the at least one second access node monitored by the first access node;
a parameter to be configured at the request of the first access node; or,
device capability information of the first access node.

The processor 800 is further configured to read the program to perform following step:
obtaining the configuration request information from a reference signal transmitted by the at least one first access node.

It should be noted that the device according to the embodiments of the present disclosure can realize all the method steps in the above method embodiments, and the same technical effects can be realized. The same parts of the present embodiments as the method embodiments, and the beneficial effects, are not repeated herein.

As shown in FIG. 9, a network access device 900 according to embodiments of the present disclosure, applied to a first access node, includes:
a first monitoring unit 901, configured to monitor a reference signal from at least one second access node, where the reference signal carries at least one of the following: a node identifier, node configuration information or service requirement information, of the second access node;
a first obtaining unit 902, configured to obtain first access configuration information of the first access node based on the node configuration information and/or the service requirement information of the at least one second access node; and
a first access unit 903, configured to access a network or update an accessed network based on the first access configuration information.

Optionally, the node configuration information includes at least one of the following: resource information, bandwidth configuration, a transmission power, service information, a modulation mode, a coding mode, a multiple access mode, a resource multiplexing mode, a communication mode or a type of reference signal, of the second access node;
the service requirement information includes at least one of the following: a type of a service, a quality of service (QOS) identifier of the service, a data rate requirement of the service, a spectral efficiency requirement, a latency requirement, a coverage requirement, a reliability requirement, a size of data cache or a resource requirement of the service;
the first access configuration information includes at least one of the following: resource information, a transmission power, service information, a modulation mode, a coding mode, a multiple access mode, a resource multiplexing mode, a communication mode or a type of reference signal, for the first access node.

Optionally, the reference signal includes: a reference signal based on a sequence, and/or, a reference signal based on signaling.

Optionally, the first obtaining unit is further configured to determine the first access configuration information of the first access node based on at least one of the node configuration information or the service requirement information of the at least one second access node.

Optionally, the first obtaining unit is further configured to transmit configuration request information; and receive indication information from a centralized control node, and determine the first access configuration information of the first access node based on the indication information.

Optionally, the configuration request information includes at least one of the following:
a node identifier of the first access node;
the node configuration information of the at least one second access node;
the service requirement information of the at least one second access node;
a parameter to be configured at the request of the first access node; or,
device capability information of the first access node.

Optionally, transmitting, by the first access node, the configuration request information including:
transmitting, by the first access node, a reference signal carrying the configuration request information.

Optionally, the first obtaining unit is further configured to obtain a first resource of the first access node, through distributed control between at least two first access nodes, based on at least one of the monitored node configuration information or service requirement information of the second access node.

Optionally, the distributed control between the at least two first access nodes includes at least one of the following:
a process of coordinating or negotiating resources by the at least one first access node;
a result of coordinating or negotiating resources by the at least one first access node;
a process of competing for the use of resources by the at least one first access node;
a result of competing for the use of resources by the at least one first access node;
a process of using resources through a pre-configured pattern by the at least one first access node;
a result of using resources through the pre-configured pattern by the at least one first access node;
a process of using resources through claiming by the at least one first access node; or,
a result of using resources through claiming by the at least one first access node.

Optionally, the network access device further includes:
a configuration unit, configured to configure the first access node based on node configuration information of the first access node before monitoring the reference signal of the at least one second access node.

Optionally, the network access device further includes:
a transmission unit, configured to perform information transmission based on the first access configuration information after accessing the network or updating the accessed network.

It should be noted that the device according to the embodiments of the present disclosure can realize all the method steps in the above method embodiments, and the same technical effects can be realized. The same parts of the present embodiments as the method embodiments, and the beneficial effects, are not repeated herein.

As shown in FIG. 10, an information transmission device 1000 according to embodiments of the present disclosure, applied to a second access node, includes:
a first transmission unit 1001, configured to transmit a reference signal, where the reference signal carries at least one of the following: a node identifier, node configuration information, or service requirement information, of the second access node.

Optionally, in embodiments of the present disclosure, the reference signal is used to provide the node configuration information and/or the service requirement information of the second access node to the first access node, the node configuration information and/or the service requirement information of at least one second access node is used to obtain first access configuration information, and the first access configuration information is used for accessing a network or updating an accessed network.

Optionally, the node configuration information includes at least one of the following: frequency domain resource information, code domain resource information, bandwidth configuration, a transmission power, service information, a modulation mode, a coding mode, a multiple access mode, a resource multiplexing mode, a communication mode or a type of reference signal; where the frequency domain resource information includes at least one of the following: a supported frequency resource, a used frequency resource, or an available frequency resource; and
the service requirement information includes at least one of the following: a type of a service, a quality of service (QOS) identifier of the service, a data rate requirement of the service, a spectral efficiency requirement, a latency requirement, a coverage requirement, a reliability requirement, a size of data cache or a resource requirement of the service.

Optionally, the reference signal includes: a reference signal based on a sequence, and/or, a reference signal based on signaling.

It should be noted that the device according to the embodiments of the present disclosure can realize all the method steps in the above method embodiments, and the same technical effects can be realized. The same parts of the present embodiments as the method embodiments, and the beneficial effects, are not repeated herein.

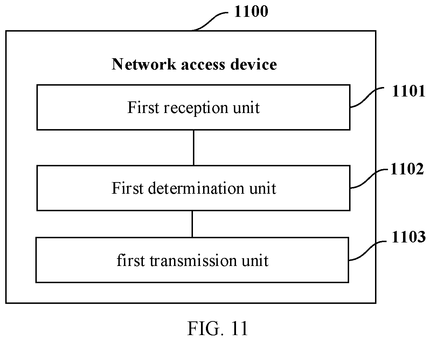

As shown in FIG. 11, a network access device 1100 according to embodiments of the present disclosure, applied to a centralized control node, includes:
a first reception unit 1101, configured to receive configuration request information from at least one first access node;
a first determination unit 1102, configured to determine first access configuration information of the at least one first access node based on the configuration request information from the at least one first access node; and
a first transmission unit 1103, configured to transmit to the at least one first access node, indication information carrying the first access configuration information.

Optionally, the configuration request information includes at least one of the following:
a node identifier of the first access node;
node configuration information of at least one second access node monitored by the first access node;
service requirement information of the at least one second access node monitored by the first access node;
a parameter to be configured at the request of the first access node; or,
device capability information of the first access node.

Optionally, the first reception unit is further configured to obtain the configuration request information from a reference signal transmitted by the at least one first access node.

It should be noted that the device according to the embodiments of the present disclosure can realize all the method steps in the above method embodiments, and the same technical effects can be realized. The same parts of the present embodiments as the method embodiments, and the beneficial effects, are not repeated herein.

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the conventional technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

Embodiments of the present disclosure also provide a processor readable storage medium, where the readable storage medium stores a program, and the program, when being execute by a processor, performs various processes in the embodiments of the above method, and same technical effects can be achieved, the repetition of which is not provided herein. The readable storage medium may be any available medium or data storage device that the processor may access, including but not limited to a magnetic memory (such as a floppy disk, a hard disk, a magnetic tape, a magnetooptical disk (MO), etc.), an optical memory (such as a compact disk (CD), a digital video disc (DVD), a Blu-ray disc (BD), a high-definition versatile disc (HVD), etc.), or a semiconductor memory (such as a ROM, an erasable programmable read-only memory (EPROM), an electrically erasable programmable read-only memory (EEPROM), a non-volatile memory (NAND FLASH), a solid state disk (SSD)).

It should be noted that the terms such as "having" and "including" or any other variants thereof, are intended to cover a non-exclusive inclusion, such that a process, method, article, or apparatus that includes a list of elements not only include those elements but may also include other elements that are not expressly listed or that are inherent to such process, method, article, or apparatus. Without more constraints, an element defined by the phrase "including a ..." does not preclude the existence of additional same elements in the process, method, article, or apparatus that includes the element.

From the above description of the embodiments, it will be clear to a person skilled in the art that the method of the above embodiments may be implemented by means of software plus common hardware platform as needed, or by means of hardware. With such an understanding, the essence the technical solutions of the present disclosure or the part contributing to the conventional technologies may be embodied in the form of a software product, and the computer software product is stored in a storage medium (e.g. ROM/RAM, magnetic disk, optical disk) including instructions to enable a terminal (which may be a cell phone, a computer, a server, an air conditioner or a network device) to perform the methods described in the various embodiments of the present disclosure.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

The embodiments of the present disclosure are described in the above with reference to the drawings, and the present disclosure is not limited to the above specific implementations. The above specific implementations are illustrative rather than restrictive. Various forms can be made by those of ordinary skill in the art under the inspiration of the present disclosure, without departing from the purpose of the present disclosure and the protection scope of the claims, all of which fall within the protection of the present disclosure.

## Claims

1. A network access method for an access node, comprising:
monitoring, by a first access node, a reference signal from at least one second access node, wherein the reference signal carries at least one of the following: a node identifier, node configuration information or service requirement information, of the second access node;
obtaining, by the first access node, first access configuration information of the first access node based on the node configuration information and/or the service requirement information of the at least one second access node; and
accessing a network or updating an accessed network, by the first access node, based on the first access configuration information.

2. The network access method according to claim 1, wherein the node configuration information comprises at least one of the following: resource information, bandwidth configuration, a transmission power, service information, a modulation mode, a coding mode, a multiple access mode, a resource multiplexing mode, a communication mode or a type of reference signal, of the second access node;
wherein the service requirement information comprises at least one of the following: a type of a service, a quality of service (QOS) identifier of the service, a data rate requirement of the service, a spectral efficiency requirement, a latency requirement, a coverage requirement, a reliability requirement, a size of data cache or a resource requirement of the service;
wherein the first access configuration information comprises at least one of the following: resource information, a transmission power, service information, a modulation mode, a coding mode, a multiple access mode, a resource multiplexing mode, a communication mode or a type of reference signal, for the first access node.

3. The network access method according to claim 1, wherein the reference signal comprises: a reference signal based on a sequence, and/or, a reference signal based on signaling.

4. The network access method according to claim 1, wherein the obtaining the first access configuration information of the first access node comprises: determining, by the first access node, the first access configuration information of the first access node based on at least one of the node configuration information or the service requirement information of the at least one second access node.

5. The network access method according to claim 1, wherein the obtaining the first access configuration information of the first access node comprises:
transmitting, by the first access node, configuration request information; and
receiving, by the first access node, indication information from a centralized control node, and determining the first access configuration information of the first access node based on the indication information.

6. The network access method according to claim 5, wherein the configuration request information comprises at least one of the following:
a node identifier of the first access node;
the node configuration information of the at least one second access node;
the service requirement information of the at least one second access node;
a parameter to be configured at the request of the first access node; or,
device capability information of the first access node.

7. The network access method according to claim 5, wherein the transmitting, by the first access node, the configuration request information comprising: transmitting, by the first access node, a reference signal carrying the configuration request information.

8. The network access method according to claim 1, wherein the obtaining the first access configuration information of the first access node comprising: obtaining, by the first access node, a first resource of the first access node, through distributed control between at least two first access nodes, based on at least one of the monitored node configuration information or service requirement information of the second access node.

9. The network access method according to claim 8, wherein the distributed control between the at least two first access nodes comprises at least one of the following:
a process of coordinating or negotiating resources by the at least one first access node;
a result of coordinating or negotiating resources by the at least one first access node;
a process of competing for the use of resources by the at least one first access node;
a result of competing for the use of resources by the at least one first access node;
a process of using resources through a pre-configured pattern by the at least one first access node;
a result of using resources through the pre-configured pattern by the at least one first access node;
a process of using resources through claiming by the at least one first access node; or,
a result of using resources through claiming by the at least one first access node.

10. The network access method according to claim 1, wherein, after the accessing the network or the updating the accessed network, the network access method further comprises: performing, by the first access node, information transmission based on the first access configuration information.

11. An information transmission method for an access node, comprising:
transmitting, by a second access node, a reference signal, wherein the reference signal carries at least one of the following: a node identifier, node configuration information, or service requirement information, of the second access node.

12. The information transmission method according to claim 11, wherein the reference signal is used to provide the node configuration information and/or the service requirement information of the second access node to the first access node, the node configuration information and/or the service requirement information of at least one second access node is used to obtain first access configuration information, and the first access configuration information is used for accessing a network or updating an accessed network.

13. The information transmission method according to claim 11, wherein the node configuration information comprises at least one of the following: frequency domain resource information, code domain resource information, bandwidth configuration, a transmission power, service information, a modulation mode, a coding mode, a multiple access mode, a resource multiplexing mode, a communication mode or a type of reference signal; wherein the frequency domain resource information comprises at least one of the following: a supported frequency resource, a used frequency resource, or an available frequency resource; and
wherein the service requirement information comprises at least one of the following: a type of a service, a quality of service (QOS) identifier of the service, a data rate requirement of the service, a spectral efficiency requirement, a latency requirement, a coverage requirement, a reliability requirement, a size of data cache or a resource requirement of the service.

14. The information transmission method according to claim 11, wherein the reference signal comprises: a reference signal based on a sequence, and/or, a reference signal based on signaling.

15. A network access method for an access node, comprising:
receiving, by a centralized control node, configuration request information from at least one first access node;
determining, by the centralized control node, first access configuration information of the at least one first access node based on the configuration request information from the at least one first access node; and
transmitting, by the centralized control node, to the at least one first access node, indication information carrying the first access configuration information.

16. The network access method according to claim 15, wherein the configuration request information comprises at least one of the following:
a node identifier of the first access node;
node configuration information of at least one second access node monitored by the first access node;
service requirement information of the at least one second access node monitored by the first access node;
a parameter to be configured at the request of the first access node; or,
device capability information of the first access node.

17. The network access method according to claim 15, wherein the receiving, by the centralized control node, the configuration request information from the at least one first access node comprising: obtaining, by the centralized control node, the configuration request information from a reference signal transmitted by the at least one first access node.

18. A network access device, applied to a first access node, comprising: a memory, a transceiver, and a processor;
wherein the memory is configured to store a computer program, the transceiver is configured to transmit and receive data under control of the processor, and the processor is configured to read the computer program in the memory to perform following operation:
monitoring a reference signal from at least one second access node, wherein the reference signal carries at least one of the following: a node identifier, node configuration information or service requirement information, of the second access node;
obtaining first access configuration information of the first access node based on the node configuration information and/or the service requirement information of the at least one second access node; and
accessing a network or updating an accessed network based on the first access configuration information.

19. The network access device according to claim 18, wherein the node configuration information comprises at least one of the following: resource information, bandwidth configuration, a transmission power, service information, a modulation mode, a coding mode, a multiple access mode, a resource multiplexing mode, a communication mode or a type of reference signal, of the second access node;
wherein the service requirement information comprises at least one of the following: a type of a service, a quality of service (QOS) identifier of the service, a data rate requirement of the service, a spectral efficiency requirement, a latency requirement, a coverage requirement, a reliability requirement, a size of data cache or a resource requirement of the service;
wherein the first access configuration information comprises at least one of the following: resource information, a transmission power, service information, a modulation mode, a coding mode, a multiple access mode, a resource multiplexing mode, a communication mode or a type of reference signal, for the first access node.

20. The network access device according to claim 18, wherein the processor is further configured to read the computer program in the memory to perform following operation:
determining the first access configuration information of the first access node based on at least one of the node configuration information or the service requirement information of the at least one second access node.

21. The network access device according to claim 18, wherein the processor is further configured to read the computer program in the memory to perform following operation:
transmitting configuration request information; and;
receiving indication information from a centralized control node, and determining the first access configuration information of the first access node based on the indication information.

22. The network access device according to claim 21, wherein the configuration request information comprises at least one of the following:
a node identifier of the first access node;
the node configuration information of the at least one second access node;
the service requirement information of the at least one second access node;
a parameter to be configured at the request of the first access node; or,
device capability information of the first access node.

23. The network access device according to claim 21, wherein the processor is further configured to read the computer program in the memory to perform following operation: transmitting a reference signal carrying the configuration request information.

24. The network access device as recited in claim 18, wherein the processor is further configured to read the computer program in the memory to perform following operation: obtaining a first resource of the first access node, through distributed control between at least two first access nodes, based on at least one of the monitored node configuration information or service requirement information of the second access node.

25. The network access device according to claim 24, wherein the distributed control between the at least two first access nodes comprises at least one of the following:
a process of coordinating or negotiating resources by the at least one first access node;
a result of coordinating or negotiating resources by the at least one first access node;
a process of competing for the use of resources by the at least one first access node;
a result of competing for the use of resources by the at least one first access node;
a process of using resources through a pre-configured pattern by the at least one first access node;
a result of using resources through the pre-configured pattern by the at least one first access node;
a process of using resources through claiming by the at least one first access node; or,
a result of using resources through claiming by the at least one first access node.

26. The network access device according to claim 18, wherein the processor is further configured to read the computer program in the memory to perform following operation:
after the accessing the network or the updating the accessed network, performing information transmission based on the first access configuration information.

27. An information transmission device, applied to a second access node, comprising: a memory, a transceiver, a processor;
wherein the memory is configured to store a computer program, the transceiver is configured to transmit and receive data under control of the processor, and the processor is configured to read the computer program in the memory to perform following operation:
transmitting a reference signal, wherein the reference signal carries at least one of the following: a node identifier, node configuration information, or service requirement information, of the second access node.

28. The information transmission device according to claim 27, wherein the reference signal is used to provide the node configuration information and/or the service requirement information of the second access node to the first access node, the node configuration information and/or the service requirement information of at least one second access node is used to obtain first access configuration information, and the first access configuration information is used for accessing a network or updating an accessed network.

29. The information transmission device according to claim 27, wherein the node configuration information comprises at least one of the following: frequency domain resource information, code domain resource information, bandwidth configuration, a transmission power, service information, a modulation mode, a coding mode, a multiple access mode, a resource multiplexing mode, a communication mode or a type of reference signal; wherein the frequency domain resource information comprises at least one of the following: a supported frequency resource, a used frequency resource, or an available frequency resource; and
wherein the service requirement information comprises at least one of the following: a type of a service, a quality of service (QOS) identifier of the service, a data rate requirement of the service, a spectral efficiency requirement, a latency requirement, a coverage requirement, a reliability requirement, a size of data cache or a resource requirement of the service.

30. The information transmission device according to claim 27, wherein the reference signal comprises: a reference signal based on a sequence, and/or, a reference signal based on signaling.

31. A network access device, applied to a centralized control node, comprising: a memory, a transceiver, and a processor;
wherein the memory is configured to store a computer program, the transceiver is configured to transmit and receive data under control of the processor, and the processor is configured to read the computer program in the memory to perform following operation:
receiving configuration request information from at least one first access node;
determining first access configuration information of the at least one first access node based on the configuration request information from the at least one first access node; and
transmitting to the at least one first access node, indication information carrying the first access configuration information.

32. The network access device according to claim 31, wherein the configuration request information comprises at least one of the following:
a node identifier of the first access node;
node configuration information of at least one second access node monitored by the first access node;
service requirement information of the at least one second access node monitored by the first access node;
a parameter to be configured at the request of the first access node; or,
device capability information of the first access node.

33. The network access device according to claim 31, wherein the processor is further configured to read the computer program in the memory to perform following operation:
obtaining the configuration request information from a reference signal transmitted by the at least one first access node.

34. A network access device, applied to a first access node, comprising:
a first monitoring unit, configured to monitor a reference signal from at least one second access node, wherein the reference signal carries at least one of the following: a node identifier, node configuration information or service requirement information, of the second access node;
a first obtaining unit, configured to obtain first access configuration information of the first access node based on the node configuration information and/or the service requirement information of the at least one second access node; and
a first access unit, configured to access a network or update an accessed network based on the first access configuration information.

35. A signal transmission device, applied to a second access node, comprising:
a first transmission unit, configured to transmit a reference signal, wherein the reference signal carries at least one of the following: a node identifier, node configuration information, or service requirement information, of the second access node.

36. A network access device, applied to a centralized control node, comprising:
a first reception unit, configured to receive configuration request information from at least one first access node;
a first determination unit, configured to determine first access configuration information of the at least one first access node based on the configuration request information from the at least one first access node; and
a first transmission unit, configured to transmit to the at least one first access node, indication information carrying the first access configuration information.

37. A processor readable storage medium, having a computer program stored thereon, wherein the computer program is configured to cause a processor to perform the method according to any one of claims 1 to 17.
